# EUROPÄISCHE PATENTSCHRIFT

(11) **EP 1 802 489 B1**
(45) Veröffentlichungstag und Bekanntmachung des Hinweises auf die Patenterteilung: **16.12.2009**
(21) Anmeldenummer: 05793091.9
(22) Anmeldetag: 24.09.2005
(51) Int. Cl.: B60Q 1/14, G06F 11/00

(54) **VERFAHREN UND VORRICHTUNG ZUR STEUERUNG EINER KRAFTFAHRZEUGBELEUCHTUNG**
METHOD AND DEVICE FOR CONTROLLING A MOTOR VEHICLE LIGHTING
PROCEDE ET DISPOSITIF POUR COMMANDER UN ECLAIRAGE DE VEHICULE AUTOMOBILE

(30) Priorität: 12.10.2004 DE 102004049558
(43) Veröffentlichungstag der Anmeldung: 04.07.2007
(73) Patentinhaber: Volkswagen Aktiengesellschaft, 38436 Wolfsburg (DE); ROBERT BOSCH GMBH, 70442 Stuttgart (DE)
(72) Erfinder: KULINNA, Hans-Jürgen, 29392 Wesendorf (DE); SCHWAB, Gabriel, 38518 Gifhorn (DE); WOLF, Frank, 77815 Brühl (DE); SCHMITT, Patrick, 77839 Lichtenau (DE)
(74) Vertreter: Dietze, Ingo
(86) Internationale Anmeldenummer: PCT/EP2005/010355
(87) Internationale Veröffentlichungsnummer: WO 2006/039998

(56) Entgegenhaltungen:
- EP-A- 1 205 373
- EP-A- 1 443 399
- DE-A1- 10 162 689
- US-A- 5 136 209
- US-A- 6 015 193
- US-A1- 2003 120 401
- US-B1- 6 173 229

## Beschreibung

Die vorliegende Erfindung betrifft eine Steuervorrichtung nach dem Oberbegriff des Anspruchs 1. Darüber hinaus betrifft die vorliegende Erfindung ein entsprechendes Verfahren zum Steuern der Beleuchtungseinrichtung.

Im Stand der Technik sind Sensoren, insbesondere Lichtsensoren, bekannt, die für die automatische Steuerung des Fahrlichts und anderer Leuchtquellen eines Fahrzeugs eingesetzt werden. Diese automatische Steuerung soll den Fahrer unterstützen, der z. B. in Städten mit Straßenbeleuchtung vergisst, das Fahrlicht beim Losfahren bei Dunkelheit einzuschalten. Es soll eine automatische Lichteinschaltung bei Dämmerungseinbruch, bei Einfahrt in einen Tunnel und andere Dunkelstrecken gewährleistet sein. Insbesondere soll bei Vorliegen von entsprechenden Signalen oder Kriterien von einem einzigen oder einer Mehrzahl von Sensorelementen ein sicheres Ein- und Ausschalten des Fahrlichts gewährleistet sein. Solche Kriterien sind z. B. Informationen über die Umgebungshelligkeit von einem Lichtsensor, Informationen über die Umgebungsfeuchtigkeit von einem Regensensor oder Informationen aus einem Frontwischer-Intervallzeitsignal.

Unter Sicherheitsgesichtspunkten ist es insbesondere wichtig, dass ein einmal korrekt eingeschaltetes Fahrlicht nicht unbeabsichtigt ausgeschaltet wird, d. h. in einer Fahrsituation ausgeschaltet wird, in welcher das Licht nicht hätte ausgeschaltet werden dürfen. Diese Gefahr besteht z. B. bei mangelhafter Datenverarbeitung und Datenübertragung. Ferner ist es wichtig, dass das Fahrlicht nicht unbeabsichtigt eingeschaltet wird, z. B. bei hellem Tag oder nur kurz dauernden Abschattungen. Dies alles soll auch ohne ein Vorsehen einer Einschaltverzögerung implementierbar sein, die bei Einfahrten in lange Tunnels nachteilig ist. Gerade bei Einfahrten in solche Tunnels muss das Licht möglichst schnell eingeschaltet werden, da sich die Pupillen des Fahrzeugführers noch nicht aufgrund plötzlich einsetzender Dunkelheit geweitet haben und der Fahrer daher zu wenig Sicht hat.

In diesem Zusammenhang ist aus der Druckschrift DE 100 05 127 A1 die Verwendung eines Regensensors für Kraftfahrzeuge als Sensor zur Messung der Umgebungshelligkeit bekannt. Das aus dieser Messung resultierende Signal ist beispielsweise zur Steuerung einer Beleuchtungsanlage eines Kraftfahrzeugs geeignet.

Ferner erwähnt die Patentschrift DE 196 30 216 C2 ein Fahrzeug mit fahrsituationsabhängiger Lichtsteuerung. Eine Steuereinheit nimmt eine Fahrlichtaktivierung jeweils dann vor, wenn die von einem Umgebungslichtsensor detektierte Helligkeit unter einen zugehörigen ersten Helligkeitsschwellwert absinkt und die von einem fahrtrichtungsspezifischen Lichtsensor erfasste Helligkeit unter einem zugehörigen, zweiten Helligkeitsschwellwert liegt.

Des Weiteren beschreibt die Druckschrift EP 0 997 359 B1 einen integrierten Selbsttest für Regensensoren. Dabei wird ein Testsignal erzeugt, das mit einem Messsignal verglichen wird.

Die weitere Druckschrift EP 1 027 227 B1 beschreibt eine Einrichtung zur Beeinflussung einer Beleuchtungseinrichtung. Für die Beeinflussung wird einerseits ein optischer Sensor und andererseits ein Wassersensor verwendet.

Aus der US 5,136,209, der EP 1 443 399 A1 und der EP 1 205 373 A1 sind Vorrichtungen nach dem Oberbegriff des Anspruchs 1 bekannt.

Die Aufgabe der vorliegenden Erfindung besteht darin, eine kostengünstige, einfache und sichere Lichtschaltung zur Verfügung zu stellen, die eine sichere Funktion gewährleistet, wobei insbesondere Fehlausschaltungen des Fahrlichts vermieden werden sollen.

Erfindungsgemäß wird diese Aufgabe gelöst durch eine Steuervorrichtung für eine Beleuchtungseinrichtung eines Fahrzeugs mit mindestens zwei Sensoreinrichtungen zum Erfassen von Steuerinformation unter Ausgabe eines ersten Sensorsignals und eines zweiten Sensorsignals, einer Auswerteeinrichtung zum Erzeugen eines ersten Ansteuersignals für die Beleuchtungseinrichtung auf der Grundlage des ersten und zweiten Sensorsignals und einer Sendeeinrichtung zum Senden des ersten Ansteuersignals an die Beleuchtungseinrichtung, wobei mit der Auswerteeinrichtung auch ein zweites Ansteuersignal für die Beleuchtungseinrichtung auf der Grundlage des ersten und zweiten Sensorsignals erzeugbar ist und mit der Sendeeinrichtung das zweite Ansteuersignal an die Beleuchtungseinrichtung als zum ersten Ansteuersignal redundantes Ansteuersignal sendbar ist.

Darüber hinaus ist erfindungsgemäß vorgesehen ein Verfahren zum Steuern einer Beleuchtungseinrichtung eines Fahrzeugs durch Erfassen von Steuerinformation unter Ausgabe eines ersten Sensorsignals und eines zweiten Sensorsignals, Erzeugen eines ersten . Ansteuersignals für die Beleuchtungseinrichtung auf der Grundlage des ersten und zweiten Sensorsignals und Senden des ersten Ansteuersignals an die Beleuchtungseinrichtung, sowie Erzeugen eines zweites Ansteuersignal für die Beleuchtungseinrichtung auf der Grundlage des ersten und zweiten Sensorsignals und Senden des zweiten Ansteuersignals an die Beleuchtungseinrichtung als zum ersten Ansteuersignal redundantes Ansteuersignal.

Erfindungsgemäß ist somit gewährleistet, dass ein kontinuierlicher zweigleisiger Datenfluss von der Sensorseite bis zur Beleuchtungsseite stattfindet. Die dadurch erzeugte Redundanz sorgt für die geforderte Sicherheit.

Die erfindungsgemäße Steuervorrichtung besitzt eine Prüfeinrichtung zur Plausibilitätsprüfung des ersten und zweiten Sensorsignals, wobei ein Plausibilitätssignal erzeugt wird. Damit wird vermieden, dass nicht plausible Sensorsignale ein Schalten der Beleuchtung und insbesondere des Fahrlichts verursachen. Hierzu weist die Auswerteeinrichturig erfindungsgemäß eine Verknüpfungseinrichtung auf, mit der das Plausibilitätssignal zur Erzeugung des ersten und zweiten Ansteuersignals berücksichtigbar ist.

Die beiden Ansteuersignale können binäre Signale sein. Mit ihnen lässt sich ein einfaches Ein- und Ausschalten am einfachsten realisieren. Dabei kann das zweite Ansteuersignal gegenüber dem ersten Ansteuersignal negiert sein. Die Beleuchtungseinrichtung kann dann feststellen, ob die Ansteuersignale fehlerfrei sind, indem sie überprüft, ob sie ein negiertes und nicht-negiertes Signal erhalten hat.

Die Auswerteeinrichtung kann ferner einen Funktionsbaustein umfassen, mit dem aus den mindestens zwei Sensorsignalen ein Rohsignal erzeugbar ist, welches in einer ersten Speicherzelle des Funktionsbausteins zur Erzeugung des ersten Ansteuersignals und in einer zweiten Speicherzelle des Funktionsbausteins zur Erzeugung des zweiten Ansteuersignals speicherbar ist. Durch die Speicherung des gleichen binären Signals in zwei verschiedenen Speicherzellen kann vermieden werden, dass ein Bit "kippt" und dies in der weiteren Verarbeitung bzw. Ansteuerung nicht festgestellt werden kann.

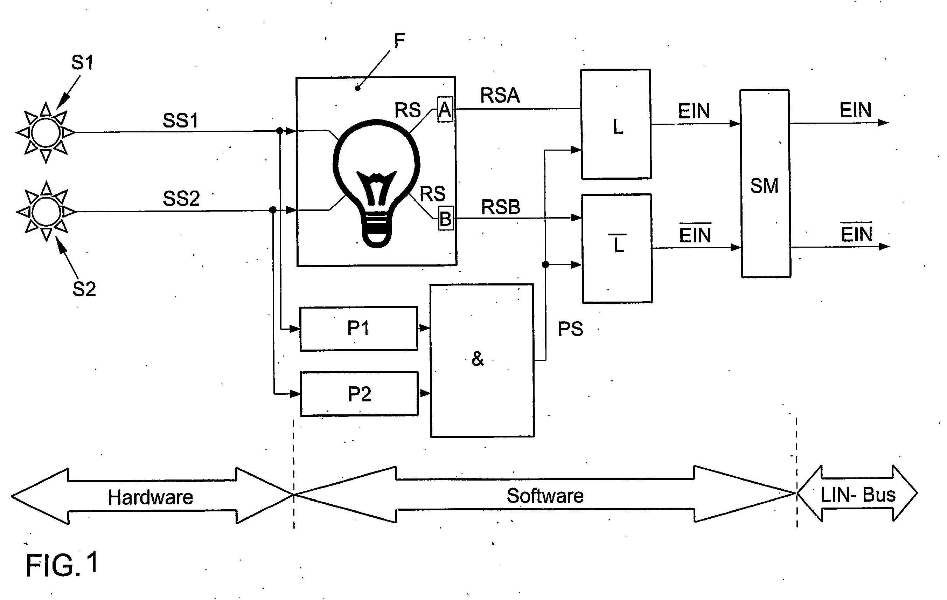

Die vorliegende Erfindung wird nun anhand der beigefügten Zeichnung (Figur 1) näher erläutert, die ein Prinzipschaltbild der erfindungsgemäßen Steuervorrichtung bzw. des erfindungsgemäßen Verfahrens darstellt.

Das nachfolgend näher geschilderte Ausführungsbeispiel stellt lediglich eine bevorzugte Ausführungsform der vorliegenden Erfindung dar.

Entsprechend Figur 1 besteht der Weg von der Sensoreinrichtung zur nicht dargestellten Beleuchtungseinrichtung aus drei Abschnitten: Hardware, Software und LIN-Bus. Selbstverständlich kann der Datenstrom auch über beliebige andere Abschnitte, insbesondere auch über einen anderen Bus erfolgen. Wesentlich ist nur, dass während der gesamten Datenübertragung oder zumindest während des größten Teils der Datenübertragung Redundanz gewährleistet ist. Dies bedeutet, dass der Datenfluss zwischen Sensoreinrichtung und Beleuchtungseinrichtung durchgehend zweigleisig verläuft.

In dem konkreten Beispiel von Figur 1 werden zur Steuerung des Fahrlichts eines Fahrzeugs zwei Lichtsensoren S1 und S2 verwendet. Anstelle eines Lichtsensörs kann aber auch beispielsweise ein Regensensor oder ein anderer Sensor verwendet werden. Die beiden Sensoren S1 und S2 geben die beiden Sensorsignale SS1 und SS2 ab und führen sie einer entsprechenden Auswertung zu. Zum einen werden die beiden Sensorsignale SS1 und SS2 in einem Funktiorisbaustein F verwertet. Dieser Baustein realisiert eine vorgegebene Funktion und stellt im vorliegenden Beispiel eine Logik dar, die aus den beiden Sensorsignalen SS1 und SS2 ein Rohsignal RS für das Ein- und Ausschalten der Beleuchtung erzeugt. Dieses Rohsignal RS wird in einer ersten RAM-Speicherzelle A und in einer zweiten RAM-Speicherzelle B gespeichert. Damit stellt der Funktionsbaustein F die Rohsignale RSA und RSB zur weiteren Verarbeitung zur Verfügung. Im Regelfall sind beide Rohsignale gleich. Lediglich im Fall eines fehlerhaften "Kippens" des Bits in einer Speicherzelle sind die beiden Signale bzw. Bits RSA und RSB unterschiedlich.

Parallel zu der Verarbeitung in dem Funktionsbaustein F werden die beiden Sensorsignale SS1 und SS2 jeweils einer Plausibilitätsprüfung P1 und P2 unterzogen. Bei der Plausibilitätsprüfung wird überprüft, ob es sich bei den Sensorsignalen SS1 und SS2 um plausible Signale handelt. Sie sind dann plausibel, wenn sie in einem bestimmten vorgegebenen Bereich liegen. Die Ergebnisse der beiden Plausibilitätsprüfungen P1 und P2 werden mit einem &-Gatter verknüpft. Daraus ergibt sich ein Plausibilitätssignal PS.

Die Ausgangssignale RSA und RSB des Funktionsbausteins F werden getrennt weiterverarbeitet. Zusammen mit dem Plausibilitätssignal PS wird das Signal RSA in einem Logikbaustein L zu einem Signal EIN verknüpft. In gleicher Weise wird das Rohsignal RSB mit dem Plausibilitätssignal in einem Logikbaustein *L̅* zu einem Ansteuersignal *E̅I̅N̅* für die Beleuchtungseinrichtung verknüpft. Dies bedeutet, dass die beiden Logikbausteine L und *L̅* im Prinzip gleich sind, jedoch einer von ihnen einen negierten Ausgang besitzt.

Die beiden Ansteuersignale EIN und *E̅I̅N̅* werden einem Sendemodul SM zugeführt, das einen Transeiver für den Bus darstellt. Das Sendemodul SM sendet die beiden Signale beispielsweise über einen LIN-Bus zur Beleuchtungseinrichtung.

Die Beleuchtungseinrichtung empfängt somit das Ansteuersignal EIN und das negierte Ansteuersignal *E̅I̅N̅* . Falls die Beleuchtungseinrichtung erkennt, dass die beiden Signale zueinander nicht negiert sind, kann sie hierdurch feststellen, dass die Datenverarbeitung oder Datenübertragung fehlerhaft ist. Ein derartiger Fehlerfall muss zum Einschalten der Beleuchtung führen.

Für den Fall, dass eine digitale Auswertung stattfindet und die Signale RSA, RSB und PS die binären Werte "0" und "1" annehmen, kann der Logikbaustein L entsprechend der folgenden Wahrheitstabelle arbeiten:

| | |
|---|---|
| RSA | 1100 |
| PS | 1001 |
| EIN | 1110 |

Dementsprechend lautet die Wahrheitstabelle für den Logikbaustein *L̅* :

| | |
|---|---|
| RSB | 1100 |
| PS | 1001 |
| *E̅I̅N̅* | 0001 |

In den beiden Tabellen bedeutet eine "1", dass das Licht eingeschaltet werden soll bzw. die beiden Sensorsignale SS1 und SS2 plausibel sind. Entsprechend der ersten Tabelle wird das Licht eingeschaltet, d. h. EIN = 1, wenn das Rohsignal entsprechend dem Funktionsbaustein ein Einschaltsignal ergibt, d. h. RSA = 1, und die beiden Sensorsignale SS1 und SS2 plausibel sind, d. h. PS = 1. Wenn die beiden Sensorsignale nicht plausibel sind, d. h. PS = 0, wird die Beleuchtung ebenfalls eingeschaltet, d. h. EIN = 1. Nur wenn das Rohsignal RSA = 0 und die beiden Sensorsignale plausibel sind, d. h. PS = 1, wird die Beleuchtung ausgeschaltet, d. h. EIN = 0.

der Logikbaustein *L̅* besitzt im Prinzip die gleiche Logik, nur dass das Ergebnis negiert ist. Demzufolge erhält der aus den gleichen Eingangswerten die entsprechend negierten Ansteuerwerte 0001.

Erfindungsgemäß kann mit dieser Schaltung bzw. mit diesem Verfahren die Sicherheit für die Schaltung einer Beleuchtung erhöht werden, da stets die notwendige Redundanz gegeben ist. Selbstverständlich kann erfindungsgemäß auch jede beliebige andere Logik verwendet werden, solange die Parallelität der Datenverarbeitung und Datenübertragung gewährleistet ist.

### Bezugszeichenliste

- A, B: RAM-Speicherzellen
- F: Funktionsbaustein
- L, *L̅*: Logikbausteine
- EIN, *E̅I̅N̅*: Ansteuersignale
- P1, P2: Plausibilitätsprüfungen
- PS: Plausibilitätssignal
- RS, RSA, RSB: Rohsignale
- SM: Sendemodul
- S1, S2: Lichtsensoren
- SS1, SS2: Sensorsignale
- &: &-Gatter

## Patentansprüche

1. Steuervorrichtung für eine Beleuchtungseinrichtung eines Fahrzeugs mit
- mindestens zwei Sensoreinrichtungen (S1, S2) zum Erfassen von Steuerinformation unter Ausgabe eines ersten Sensorsignals (SS1) und eines zweiten Sensorsignals (SS2),
- einer Auswerteeinrichtung zum Erzeugen eines ersten Ansteuersignals (EIN) für die Beleuchtungseinrichtung auf der Grundlage des ersten und zweiten Sensorsignals (SS1, SS2) und
- einer Sendeeinrichtung (SM) zum Senden des ersten Ansteuersignals (EIN) an die Beleuchtungseinrichtung, wobei
- mit der Auswerteeinrichtung auch ein zweites Ansteuersignal (*E̅I̅N̅*) für die Beleuchtungseinrichtung auf der Grundlage des ersten und zweiten Sensorsignals (SS1, SS2) erzeugbar ist und
- mit der Sendeeinrichtung (SM) das zweite Ansteuersignal (*E̅I̅N̅*) an die Beleuchtungseinrichtung als zum ersten Ansteuersignal (EIN) redundantes Ansteuersignal sendbar ist,
**dadurch gekennzeichnet,**
- **dass** die Steuervorrichtung eine Prüfeinrichtung (P1, P2) zur Plausibilitätsprüfung des ersten und zweiten Sensorsignals (SS1, SS2) umfasst, wobei ein Plausibilitätssignal (PS) erzeugbar ist, und
- **dass** die Auswerteeinrichtung eine Verknüpfungseinrichtung (L, *L̅*) aufweist, mit der das Plausibilitätssignals (PS) zur Erzeugung des ersten und zweiten Ansteuersignals (EIN, *E̅I̅N̅*) berücksichtigbar ist.

2. Steuervorrichtung nach Anspruch 1, wobei die beiden Ansteuersignale (EIN, *E̅I̅N̅*) binäre Signale sind.

3. Steuervorrichtung nach Anspruch 2, wobei das zweite Ansteuersignal (*E̅I̅N̅*) gegenüber dem ersten Ansteuersignal (EIN) negiert ist.

4. Steuervorrichtung nach einem der vorhergehenden Ansprüche, wobei die Auswerteeinrichtung einen Funktionsbaustein (F) umfasst, mit dem aus den mindestens zwei Sensorsignalen (SS1, SS2) ein Rohsignal (RS) erzeugbar ist, welches in einer ersten Speicherzelle (A) des Funktionsbausteins (F) zur Erzeugung des ersten Ansteuersignals (EIN) und in einer zweiten Speicherzelle (B) des Funktionsbausteins (F) zur Erzeugung des zweiten Ansteuersignals (*E̅I̅N̅*) speicherbar ist.

5. Verfahren zum Steuern einer Beleuchtungseinrichtung eines Fahrzeugs durch
- Erfassen von Steuerinformation unter Ausgabe eines ersten Sensorsignals (SS1) und eines zweiten Sensorsignals (SS2),
- Erzeugen eines ersten Ansteuersignals (EIN) für die Beleuchtungseinrichtung auf der Grundlage des ersten und zweiten Sensorsignals (SS1, SS2),
- Senden des ersten Ansteuersignals (EIN) an die Beleuchtungseinrichtung,
- Erzeugen eines zweites Ansteuersignal (*E̅I̅N̅*) für die Beleuchtungseinrichtung auf der Grundlage des ersten und zweiten Sensorsignals (SS1, SS2) und
- Senden des zweiten Ansteuersignals (*E̅I̅N̅*) an die Beleuchtungseinrichtung als zum ersten Ansteuersignal (EIN) redundantes Ansteuersignal,
**dadurch gekennzeichnet,**
- **dass** eine Plausibilitätsprüfung des ersten und zweiten Sensorsignals (SS1, SS2) unter Erzeugung eines Plausibilitätssignals (PS) durchgeführt wird, wobei zur Erzeugung des ersten und zweiten Ansteuersignals (EIN, *E̅I̅N̅)* das Plausibilitätssignal (PS) berücksichtigt wird.

6. Verfahren nach Anspruch 5, wobei die beiden Ansteuersignale (EIN, *E̅I̅N̅*) binäre Signale sind.

7. Verfahren nach Anspruch 6, wobei das zweite Ansteuersignal (*E̅I̅N̅*) gegenüber dem ersten Ansteuersignal (EIN) negiert ist.

8. Verfahren nach einem der Ansprüche 5 bis 7, wobei aus den mindestens zwei Sensorsignalen (SS1, SS2) entsprechend einer vorgegebenen Funktion ein Rohsignal (RS) erzeugt wird, welches in einer ersten Speicherzelle (A) zur Erzeugung des ersten Ansteuersignals (EIN) und in einer zweiten Speicherzelle (B) zur Erzeugung des zweiten Ansteuersignals (̅*̅E̅I̅N̅*̅) gespeichert wird.

## Claims

1. Control apparatus for a lightning device of a vehicle, having
- at least two sensor devices (S1, S2) for detecting control information while outputting a first sensor signal (SS1) and a second sensor signal (SS2),
- an evaluation device for generating a first drive signal (EIN) for the lighting device on the basis of the first and second sensor signals (SS1, SS2), and
- a transmitting device (SM) for transmitting the first drive signal (EIN) to the lighting device,
- the evaluation device also being able to be used to generate a second drive signal (*E̅I̅N̅*) for the lighting device on the basis of the first and second sensor signals (SS1, SS2), and
- the transmitting device (SM) being able to be used to transmit the second drive signal (*E̅I̅N̅*) to the lighting device in the form of a drive signal which is redundant with respect to the first drive signal (EIN),
**characterized**
- **in that** the control apparatus comprises a checking device (P1, P2) for carrying out a plausibility check on the first and second sensor signals (SS1, SS2), a plausibility signal (PS) being able to be generated, and
- **in that** the evaluation device has a combination device (L, *L̅*) which can be used to take into account the plausibility signal (PS) for the purpose of generating the first and second drive signals (EIN, *E̅I̅N̅*).

2. Control apparatus according to Claim 1, the two drive signals (EIN, *̅E̅I̅N̅*̅)̅ being binary signals.

3. Control apparatus according to Claim 2, the second drive signal (*E̅I̅N̅*) being negated with respect to the first drive signal (EIN).

4. Control apparatus according to one of the preceding claims, the evaluation device comprising a function module (F) which- can be used to generate a raw signal (RS) from the at least two sensor signals (SS1, SS2), which raw signal can be stored in a first memory cell (A) of the function module (F) for the purpose of generating the first drive signal (EIN) and can be stored in a second memory cell (B) of the function module (F) for the purpose of generating the second drive signal (*E̅I̅N̅*).

5. Method for controlling a lighting device of a vehicle by
- detecting control information while outputting a first sensor signal (SS1) and a second sensor signal (*SS2*),
- generating a first drive signal (EIN) for the lighting device on the basis of the first and second sensor signals (SS1, SS2),
- transmitting the first drive signal (EIN) to the lighting device,
- generating a second drive signal (*E̅I̅N̅*) for the lighting device on the basis of the first and second sensor signals (SS1, SS2), and
- transmitting the second drive signal (*E̅I̅N̅*) to the lighting device in the form of a drive signal which is redundant with respect to the first drive signal (EIN),
**characterized**
- **in that** a plausibility check is carried out on the first and second sensor signals (SS1, SS2) while generating a plausibility signal (PS), the plausibility signal (PS) being taken into account in order to generate the first and second drive signals (EIN, *E̅I̅N̅*).

6. Method according to Claim 5, the two drive signals (EIN, *E̅I̅N̅*) being binary signals.

7. Method according to Claim 6, the second drive signal (*E̅I̅N̅*) being negated with respect to the first drive signal (EIN).

8. Method according to one of Claims 5 to 7, a raw signal (RS) being generated from the at least two sensor signals (SS1, SS2) according to a predefined function, which raw signal is stored in a first memory cell (A) for the purpose of generating the first drive signal (EIN) and is stored in a second memory cell (B) for the purpose of generating the second drive signal (*E̅I̅N̅*).

## Revendications

1. Appareil de commande pour un dispositif d'éclairage d'un véhicule comprenant
- au moins deux dispositifs de détection (S1, S2) pour détecter des informations de commande en délivrant un premier signal de détecteur (SS1) et un deuxième signal de détecteur (SS2),
- un dispositif d'interprétation pour générer un premier signal de commande (EIN) pour le dispositif d'éclairage sur la base du premier et du deuxième signal de détecteur (SS1, SS2) et
- un dispositif d'émission (SM) pour envoyer le premier signal de commande (EIN) au dispositif d'éclairage,
- un deuxième signal de commande (*E̅I̅N̅*) pouvant être également généré avec le dispositif d'interprétation pour le dispositif d'éclairage sur la base du premier et du deuxième signal de détecteur (SS1, SS2) et
- le deuxième signal de commande (*E̅I̅N̅*) pouvant être envoyé au dispositif d'éclairage avec le dispositif d'émission (SM) en tant que signal de commande redondant du premier signal de commande (EIN)
**caractérisé en ce**
- **que** l'appareil de commande comprend un dispositif de contrôle (P1, P2) destiné à contrôler la plausibilité du premier et du deuxième signal de détecteur (SS1, SS2), un signal de plausibilité (PS) pouvant être généré, et
- **que** le dispositif d'interprétation présente un dispositif de combinaison (L, L̅) qui permet de prendre en considération le signal de plausibilité (PS) pour générer le premier et le deuxième signal de commande (EIN, *E̅I̅N̅*).

2. Appareil de commande selon la revendication 1, les deux signaux de commande (EIN, *E̅I̅N̅*) étant des signaux binaires.

3. Appareil de commande selon la revendication 2, le deuxième signal de commande (*E̅I̅N̅*) étant inversé logiquement par rapport au premier signal de commande (EIN).

4. Appareil de commande selon l'une des revendications précédentes, le dispositif d'interprétation comprenant un composant fonctionnel (F) qui permet, à partir des au moins deux signaux de détecteur (SS1, SS2), de générer un signal brut (RS) qui peut être mémorisé dans une première cellule de mémoire (A) du composant fonctionnel (F) en vue de générer le premier signal de commande (EIN) et dans une deuxième cellule de mémoire (B) du composant fonctionnel (F) en vue de générer le deuxième signal de commande (*E̅I̅N̅*).

5. Procédé pour commander un dispositif d'éclairage d'un véhicule par
- détection d'informations de commande en délivrant un premier signal de détecteur (SS1) et un deuxième signal de détecteur (SS2),
- génération d'un premier signal de commande (EIN) pour le dispositif d'éclairage sur la base du premier et du deuxième signal de détecteur (SS1, SS2),
- envoi du premier signal de commande (EIN) au dispositif d'éclairage,
- génération d'un deuxième signal de commande (*E̅I̅N̅*) pour le dispositif d'éclairage sur la base du premier et du deuxième signal de détecteur (SS1, SS2) et
- envoi du deuxième signal de commande (*E̅I̅N̅*) au dispositif d'éclairage en tant que signal de commande redondant du premier signal de commande (EIN)
**caractérisé en ce**
- **qu'**un contrôle de la plausibilité du premier et du deuxième signal de détecteur (SS1, SS2) est effectué en générant un signal de plausibilité (PS), le signal de plausibilité (PS) étant pris en considération pour générer le premier et le deuxième signal de commande (EIN, *E̅I̅N̅*)

6. Procédé selon la revendication 5, les deux signaux de commande (EIN, *E̅I̅N̅*) étant des signaux binaires.

7. Procédé selon la revendication 6, le deuxième signal de commande (*E̅I̅N̅*) étant inversé logiquement par rapport au premier signal de commande (EIN).

8. Procédé selon l'une des revendications 5 à 7, un signal brut (RS) étant généré à partir des au moins deux signaux de détecteur (SS1, SS2) conformément à une fonction prédéfinie, lequel est mémorisé dans une première cellule de mémoire (A) en vue de générer le premier signal de commande (EIN) et dans une deuxième cellule de mémoire (B) en vue de générer le deuxième signal de commande (*E̅I̅N̅*)
